# EUROPEAN PATENT APPLICATION

(11) **EP 1 187 438 A1**
(43) Date of publication of application: **13.03.2002**
(21) Application number: 01306204.7
(22) Date of filing: 19.07.2001
(51) Int. Cl.: H04M 3/22, H04M 3/42, H04Q 3/00

(54) **Apparatus for secure remote access**

(30) Priority: 31.07.2000 US 628758
(71) Applicant: Avaya Technology Corp., Basking Ridge, NJ 07920 (US)
(72) Inventor: Cannon, Thomas Calvin, Fremont, CA 94555-2276 (US)
(74) Representative: Williams, David John

(57) **Abstract**

A maintenance center is allowed to access a remote processor that is controlling a remote system at a remote site having a central computer. This access is via the Internet going through a firewall provided by the central processor except when this Internet access is not operational. If the remote processor cannot access the Internet then, a modem is enabled on a remote maintenance unit that is part of the remote system so that access can be obtained to the remote processor by the maintenance center. This access is used by the maintenance center to perform maintenance operations. The remote processor is a PBX processor that is controlling a PBX, which is providing telecommunication services. When the PBX processor is no longer functional, a remote maintenance unit having control and access to the PBX processor transmits a message to a maintenance center indicating that the PBX processor is non-operational and enables a modem to accept incoming calls from the public telephone network allowing the maintenance center access to the remote maintenance unit. Once the PBX processor is again functional, the remote maintenance unit will disable incoming calls to the modem.

## Description

### Technical Field

This invention relates to secure external access to a computer complex and more particularly, to an arrangement for allowing secure access to a maintenance computer.

### Background of the Invention

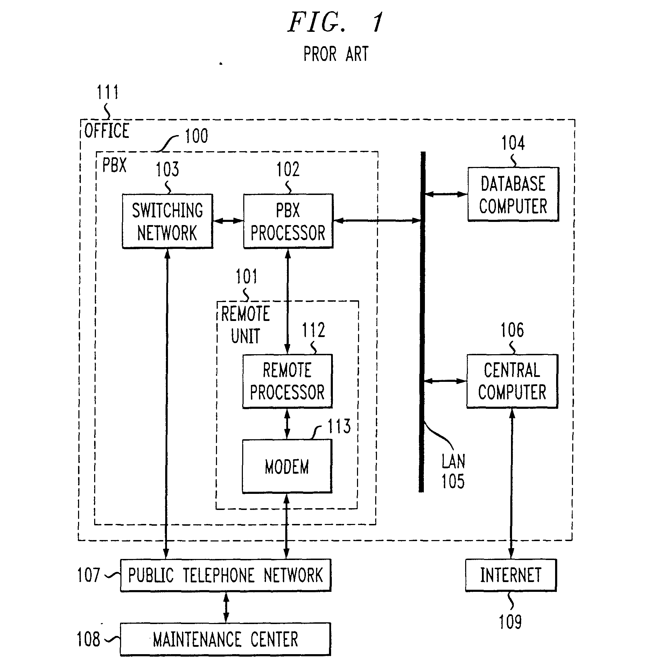

In the prior art, the use of a modem by a maintenance center to access a remote system is well known. FIG. 1 illustrates an arrangement common in the prior art. In FIG. 1, PBX 100 is providing telecommunication support for office 111. PBX 100 utilizes PBX processor 102 to perform the telecommunication functions using switch network 103 to perform the necessary switching operations. In addition, PBX processor 102 has access to database computer 104 via LAN 105. Hence, PBX processor 102 has access also to central computer 106 via LAN 105. Within the prior art, PBX processor 102 communicates with maintenance center 108 via remote unit 101 and public telephone network 107. Maintenance center 108 gains access to remote unit 101 by placing a telephone call to modem 113. Central computer 106 also has access to Internet 109 so as to provide various Internet functions. However, as is well known in the art, central computer 106 places a "firewall" between accesses from Internet 109. The methods of designing and implementing such a firewall are well known by those skilled in the art. The problem that exists in the prior art is the ability of an unauthorized individual to gain access to LAN 105 via modem 113, remote processor 112, and PBX processor 102. Many types of businesses, particularly financial institutions, are concerned about this type of access to LAN 105.

Prior art solutions to this problem have been to utilize password or encryption key protection on accesses from public network 107 to modem 113. Whereas, these methods have worked to assure that unauthorized access does not occur, many industries are not willing to accept the possibility that there still may be unauthorized access through modem 113.

### Summary of the Invention

The foregoing problems are solved and a technical advance is achieved allowing a maintenance center to access a remote processor that is controlling a remote system at a remote site having a central computer. This access is via the Internet going through a firewall provided by the central processor except when this Internet access is not operational. Advantageously, if the remote processor cannot access the Internet then, a modem is enabled on a remote maintenance unit that is part of the remote system so that access can be obtained to the remote processor by the maintenance center. This access is used by the maintenance center to perform maintenance operations. Advantageously, the remote processor is a PBX processor that is controlling a PBX, which is providing telecommunication services. When the PBX processor is no longer functional, a remote maintenance unit having control and access to the PBX processor transmits a message to a maintenance center indicating that the PBX processor is non-operational and enables a modem to accept incoming calls from the public telephone network allowing the maintenance center access to the remote maintenance unit. Once the PBX processor is again functional, the remote maintenance unit will disable incoming calls to the modem.

These and other features and advantages of the invention will become apparent from the following description of the illustrative embodiment of the invention considered together with the drawing.

### Brief Description of the Drawing

FIG. 1 is a block diagram of a prior art system;

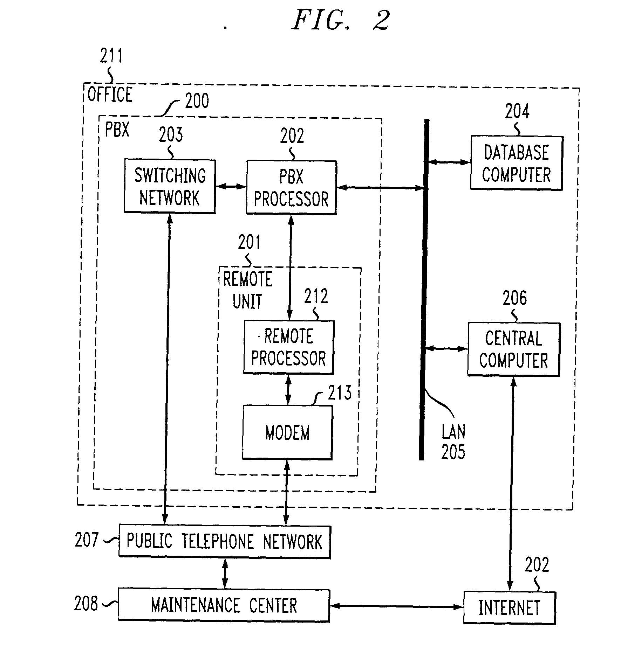

FIG. 2 is a block diagram of a system for implementing the invention;
FIG. 3 illustrates a software structure for implementing the invention; and
FIG. 4 illustrates, in flow chart form, steps performed by a remote processor in a remote unit for implementing the invention.

### Detailed Description

FIG. 1 illustrates a system for implementing the invention. One skilled in the art would readily realize that although this embodiment is described in terms of a PBX other systems could also implement the apparatus and method of the invention. PBX 200 is providing telecommunication services for a variety of telecommunication terminals not illustrated. PBX processor 202 controls switching network 203 that provides access to public telephone network 207. Maintenance for PBX processor 202 is provided by remote unit 201 that is controlled by remote processor 212. PBX processor 202 has access to LAN 205 so that PBX processor 202 can have access to database computer 204 and central computer 206. Central computer 206 maintains a communication path with Internet 209 but institutes a firewall between this Internet access and the remainder of Office 211 using well-known techniques to those skilled in the art.

In normal operation, modem 213 will not accept incoming telephone calls from public network 207. When PBX processor 202 is functional, maintenance center 208 gains access to remote processor 212 via Internet 209. This connection is communicated from Internet 209 via central computer 206, LAN 205, and PBX processor 202. PBX processor 202 maintains a watchdog application that periodically transmits a message to remote processor 212 assuring remote processor 212 that PBX processor 202 is still functional. When remote processor 212 fails to receive the periodic message from PBX processor 202, remote processor 212 transmits an alarm message to maintenance center 208 via modem 213 and public telephone network 207. Next, remote processor 212 enables modem 213 to receive incoming calls. Maintenance center 208 then establishes communication with remote processor 212 via public telephone network 207 and modem 213. After maintenance center 208 has placed PBX processor 202 in a functional state, PBX processor 202 once again sends messages to remote processor 212 indicating that it is functioning. In response to this message from PBX processor 202, remote processor 212 disables modem 213 from accepting incoming calls from public telephone network 207.

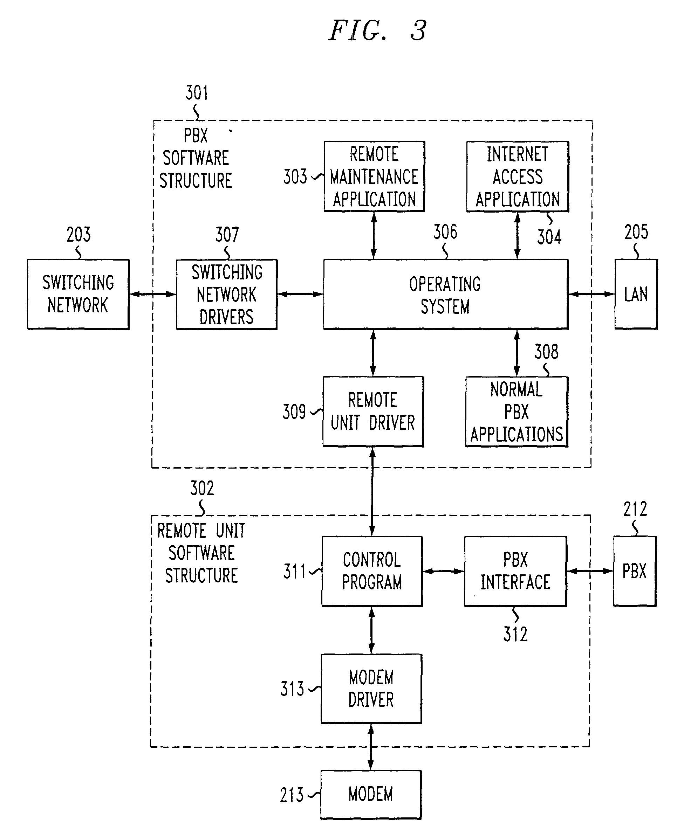

FIG. 3 illustrates the software structure both in PBX processor 202 and remote processor 212. PBX software structure 301 consists of software elements 303-309. Operating system 306 provides the overall control of PBX software structure 301. PBX applications 308 are those applications that are common for the control of PBX systems and are well known to those skilled in the art. Switching network drivers 307 are those drivers utilized by operating system 306 to communication with switching network 203. Remote maintenance application 303 is the application that communicates with control program 311 of remote unit software structure 302 in performing the remote functions. Finally, Internet access application 304 provides Internet access via LAN 205 and central computer 206 to Internet 209.

Remote unit software structure 302 consists of software elements 311-312. Control program 311 provides the overall control of remote processor 212 and utilizes modem driver 313 to communicate with modem 213 and PBX interface 312 to communicate with PBX 212.

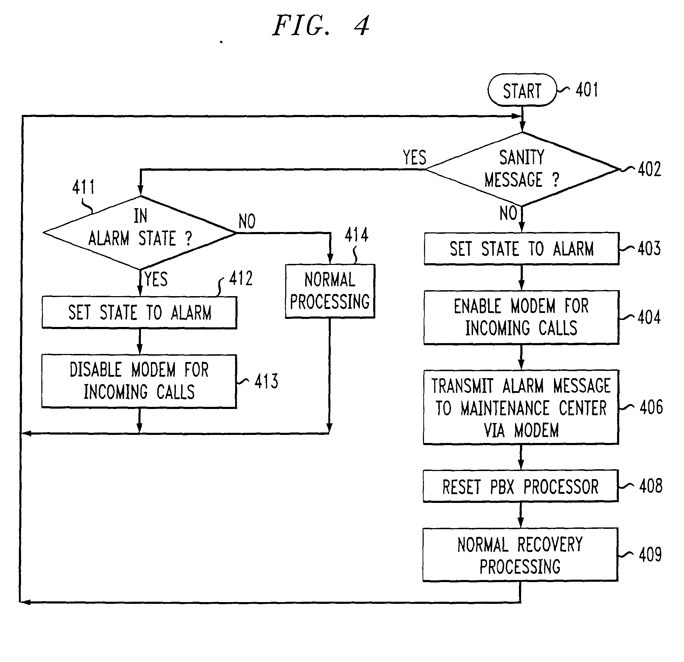

FIG. 4 illustrates the steps performed by control program 311 of FIG. 3 in implementing the invention. Once started from block 401, decision block 402 determines if the periodic sanity message has been received from remote maintenance application 303 of PBX software structure 301. If the answer is no, control is transferred to block 403 which sets the state of the control program to alarm, and block 404 enables modem 213 via modem driver 313 for accepting incoming calls. Next, block 406 transmits an alarm message to maintenance center 208 via modem 213 and modem driver 313. Block 408 attempts to reset PBX processor 202 via PBX interface 312. Finally, block 409 performs the normal recovery processing before returning control back to decision block 402.

Returning to decision block 402, if a sanity message has been received from remote maintenance application 303, control is transferred to decision block 411, which determines if the control program is presently in the alarm state. If the answer is no, control is transferred to block 414 which performs normal processing before returning control back to decision block 402. If the answer in decision block 411 is yes, control is transferred to block 412 which sets the state of the control program to normal, and block 413 disables modem 213 from accepting incoming calls before transferring control back to decision block 402.

Of course, various changes and modifications to the illustrative embodiment described above will be apparent to those skilled in the art. Such changes and modifications can be made without departing from the spirit and scope of the invention and without diminishing its attendant advantages. It is therefore intended that such changes and modifications be covered by the following claims except insofar as limited by the prior art.

## Claims

1. A method for controlling remote access to a telecommunication switching system via a modem in a remote maintenance unit that is directly connected to the telecommunication switching system by a maintenance center computer with the telecommunication switching system being interconnected with a central computer via a local area network and a first type of access to the telecommunication switching system being via a data network, the central computer, and the local area network, and the telecommunication switching system is controlled by an internal control computer, comprising the steps of:
**CHARACTERIZED BY**
detecting failure of the first type of access path to the telecommunication switching system by a maintenance controller that controls the remote maintenance unit;
enabling by the maintenance controller access to the modem by the maintenance center computer;
detecting by the maintenance controller ability to access telecommunication switching system by the maintenance center computer via the first type of access path; and
disabling by the maintenance controller access to the modem.

2. The method of claim 1 further comprises the step of transmitting a signal to the maintenance controller by the control computer upon the first type of access path being enabled; and
the step of detecting failure of the first access path comprises the step of detecting the absence of the transmitted signal to determine failure of the first type of access path.

3. The method of claim 2 wherein the step of detecting ability to access telecommunication switching system via the first type of access path comprises the step of detecting the presence of the transmitted signal to determine ability to access the first type of access path.

4. The method of claim 3 wherein the data network is the Internet.

5. An apparatus for controlling remote access to a telecommunication switching system via a modem in a remote maintenance unit that is directly connected to the telecommunication switching system by a maintenance center computer with the telecommunication switching system being interconnected with a central computer via a local area network and a first type of access to the telecommunication switching system being via a data network, the central computer, and the local area network, and the telecommunication switching system is controlled by an internal control computer, comprising:
**CHARACTERIZED BY**
means in a maintenance controller for detecting failure of the first type of access path to the telecommunication switching system where the maintenance controller controls the remote maintenance unit;
means in the maintenance controller for enabling access to the modem by the maintenance center computer;
means in the maintenance controller for detecting ability to access telecommunication switching system by the maintenance center computer via the first type of access path; and
means in the maintenance controller for disabling access to the modem.

6. The apparatus of claim 5 further comprises means for transmitting in the control computer a signal to the maintenance controller upon the first type of access path being enabled; and
the means for detecting failure of the first access path comprises means for detecting the absence of the transmitted signal to determine failure of the first type of access path.

7. The apparatus of claim 6 wherein the means for detecting ability to access telecommunication switching system via the first type of access path comprises means for detecting the presence of the transmitted signal to determine ability to access the first type of access path.

8. The apparatus of claim 7 wherein the data network is the Internet.
